(19) Europäisches Patentamt / European Patent Office / Office européen des brevets

(11) **EP 1 890 803 B1**

(12) **FASCICULE DE BREVET EUROPEEN**

(45) Date de publication et mention
de la délivrance du brevet:
**21.07.2010 Bulletin 2010/29**

(21) Numéro de dépôt: **06764795.8**

(22) Date de dépôt: **15.06.2006**

(51) Int Cl.:
**B01J 19/00** *(2006.01)*        **B01F 13/00** *(2006.01)*
**B01L 3/00** *(2006.01)*        **B81B 7/00** *(2006.01)*
**G01N 21/62** *(2006.01)*

(86) Numéro de dépôt international:
**PCT/FR2006/001361**

(87) Numéro de publication internationale:
**WO 2006/134274 (21.12.2006 Gazette 2006/51)**

(54) **DISPOSITIF D'ECOULEMENT MICROFLUIDIQUE PERMETTANT DE DETERMINER DES PARAMETRES D'UNE TRANSFORMATION PHYSIQUE ET/OU CHIMIQUE, ET SON UTILISATION**

MIKROFLUIDIKZIRKULATIONSVORRICHTUNG ZUR BESTIMMUNG VON PARAMETERN EINER PHYSIKALISCHEN UND/ODER CHEMISCHEN TRANSFORMATION UND VERWENDUNG DAVON

MICROFLUIDIC CIRCULATING DEVICE FOR DETERMINING PARAMETERS OF A PHYSICAL AND/OR CHEMICAL TRANSFORMATION, AND USE THEREOF

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **15.06.2005 FR 0506063**
**09.09.2005 FR 0509217**

(43) Date de publication de la demande:
**27.02.2008 Bulletin 2008/09**

(73) Titulaire: **Rhodia Opérations**
**93306 Aubervilliers (FR)**

(72) Inventeurs:
• **CRISTOBAL, Galder**
**F-33000 Bordeaux (FR)**
• **AJDARI, Armand**
**F-75013 Paris (FR)**
• **JOANICOT, Mathieu**
**F-92290 Chatenay-malabry (FR)**

(74) Mandataire: **Schouller, Jean-Philippe et al**
**Cabinet Lavoix**
**62, rue de Bonnel**
**69448 Lyon Cedex 03 (FR)**

(56) Documents cités:
EP-A2- 1 391 237        WO-A-96/04547
WO-A-97/04297        WO-A-97/21090
WO-A-03/052428        WO-A-03/089129
WO-A-2005/049196        US-A- 6 004 515
US-A- 6 136 272        US-A1- 2002 084 185
US-A1- 2002 119 536        US-A1- 2002 137 218
US-B1- 6 391 622        US-B1- 6 582 963
US-B1- 6 637 463        US-B1- 6 749 814
US-B1- 6 900 021

## Description

La présente invention concerne un dispositif d'écoulement microfluidique permettant de déterminer des paramètres d'une transformation physique et/ou chimique, ainsi qu'une utilisation d'un tel dispositif d'écoulement microfluidique.

Par transformation, on entend tout type d'interaction susceptible d'intervenir dans un mélange d'au moins deux composants. De façon non limitative, cette transformation peut être une réaction de type chimique et/ou physique, comme par exemple tout type de réaction chimique classique, ainsi qu'également une cristallisation ou une précipitation, ou encore entre autres une modification d'un équilibre liquide/vapeur. De façon générale, au sens de l'invention, une telle transformation est susceptible de mettre en oeuvre des phénomènes chimiques, par échange ou mise en commun d'électrons, des interactions ou répulsions physiques, telles que des liaisons hydrogènes, des interactions électrostatiques, des attractions ou répulsions stériques, des affinités pour différents milieux hydrophiles et/ou hydrophobes, des stabilités de formulation, des floculations ou encore des transferts de phases, par exemple de type liquide/liquide, solide/liquide ou gaz/liquide.

Au sens de l'invention, les paramètres d'une telle transformation sont, de manière non limitative, les cinétiques de réaction chimique en milieu homogène ou hétérogène, les conditions permettant d'obtenir un optimum de rendement pour des réactions chimiques, des enthalpies de réactions, des processus temporels de réactions chimiques et physiques, ainsi que des diagrammes de solubilité ou encore de phases.

De façon classique, un dispositif d'écoulement microfluidique comprend au moins un microcanal, permettant l'écoulement d'au moins un fluide. La dimension caractéristique de chaque microcanal, telle que visée par l'invention, est comprise entre quelques micromètres et le millimètre. De manière typique, cette dimension provoque un écoulement sensiblement laminaire au sein du microcanal, avec un nombre de Reynolds inférieur à 1.

Un dispositif d'écoulement microfluidique est connu de l'article « Quantitative analysis of molecular interaction in a microfluidic channel : The T-sensor » (anal. Chem. 1999, 71, 5340-5347) qui sera dénommé ci-après Yager et Al. Ce dispositif d'écoulement comprend deux canaux amont, ainsi qu'un unique canal aval, qui définissent une forme de T. Cette publication décrit la possibilité de faire s'écouler un fluide cible, ainsi qu'un indicateur fluorescent au sein du canal aval, de manière à déterminer la concentration de ce fluide cible par mesure de la fluorescence dans une région de ce canal, où se produit une interdiffusion entre le fluide cible et l'indicateur.

L'application d'un dispositif d'écoulement microfluidique, pour déterminer des paramètres d'une transformation de type chimique, est connu de l'article « A Microfluidic System for Controlling Reaction Networks in Time » (Angewandte Chemie, International Edition 2003, 42, 767 - 772), qui sera dénommé ci-après Ismagilov et al. L'agencement de ce dispositif fait intervenir deux arrivées de fluides respectifs, susceptibles de réagir mutuellement. Ces deux réactifs sont tout d'abord mis en contact avec un fluide de séparation afin d'éviter une réaction précoce, puis sont mélangés à un fluide non miscible, qui est typiquement de l'huile. Ceci conduit à la formation d'entités dispersées, à savoir d'une succession de gouttes, dont chacune est formée d'un mélange des deux réactifs précités.

Dans ces conditions, lorsqu'intervient une réaction chimique, chaque goutte forme un micro-réacteur, dont la composition évolue le long du microcanal. Ce dernier est par ailleurs pourvu de lacets, qui contribuent à déformer l'écoulement intérieur des gouttes, ce qui permet d'améliorer le mélange entre deux réactifs. L'évolution de la composition, au sein de chaque goutte, est mesurée de manière optique, notamment par fluorescence.

Enfin, la publication « Microfluidic route to the control production of nanoparticles » Chem.commun., 2002, 1136-1137), dénommée ci-après deMello et al. décrit la formation de nanoparticules de CdS. Il est par ailleurs assuré un suivi de la réaction correspondante, par absorption. Cet article met l'accent sur le fait que la solution microfluidique permet notamment d'améliorer l'homogénéité le long du volume réactionnel.

L'un des avantages de la solution microfluidique est qu'elle permet d'utiliser seulement une quantité extrêmement faible de fluide. Par ailleurs, elle autorise une variation facile de la composition du mélange de composants étudiés, moyennant une modification du débit de ces derniers. Cependant, la solution divulguée par Ismagilov et al se révèle peu satisfaisante, en particulier en ce qu'elle ne permet pas une détermination efficace des paramètres de la transformation qu'elle se propose d'étudier.

Par ailleurs, de manière générale, il existe un besoin constant de l'industrie de développer des produits nouveaux, présentant des propriétés nouvelles, par exemple de nouveaux composés chimiques ou de nouvelles compositions comprenant des nouveaux produits chimiques et/ou de nouvelles associations de produits chimiques. Les transformations physiques et/ou chimiques des produits sont des propriétés importantes pour bon nombre d'applications, qu'il convient bien souvent de tester dans les processus de Recherche et Développement. Il existe un besoin en procédés et installations pour accélérer les processus de Recherche et Développement, par exemple pour tester un plus grand nombre de produits et/ou pour mettre en oeuvre les tests sur de plus petites quantités de produits, et/ou pour mettre en oeuvre les tests de manière plus rapide, et/ou mettre en oeuvre des tests relatifs à des transformations trop lentes pour être étudiées dans le dispositif proposé par Ismagilov.

US-B-6 637 463 décrit un dispositif d'écoulement microfluidique comprenant une entrée, une sortie ainsi que différents canaux dérivés, reliant cette entrée et cette sortie. Ces canaux dérivés sont configurés pour induire une perte de charge prédéfinie au fluide s'écoulant dans ces canaux, à un débit prédéterminé.

US-A-6 391 622 concerne un dispositif d'écoulement microfluidique comprenant un microcanal d'analyse, lequel est alimenté par différents réservoirs, via des microcanaux de liaison correspondants. L'analyse peut avoir lieu à plusieurs endroits du microcanal précité.

Ceci étant précisé, l'invention se propose de remédier aux inconvénients de l'art antérieur évoqués ci-dessus. Elle vise en particulier à proposer un dispositif d'écoulement microfluidique, de structure simple et compacte, qui permet d'accéder de façon satisfaisante à au moins certains des paramètres d'une transformation physique et/ou chimique.

A cet effet, elle a pour objet un dispositif d'écoulement microfluidique selon la revendication 1 annexée.

D'autres caractéristiques de l'invention font l'objet des revendication 2 à 18.

L'invention a aussi pour objet un ensemble de détermination de paramètres selon la revendication 19 annexée.

L'invention a également pour objet une utilisation de cet ensemble de détermination, selon la revendication 21 annexée.

D'autres caractéristiques de l'invention font l'objet des revendications 22 à 33.

L'invention va être décrite ci-après, en référence aux dessins annexés, donnés à titre d'exemples , dans lesquels :

- la figure 1 est une vue de face, illustrant de façon schématique un dispositif d'écoulement microfluidique conforme à l'invention ;
- la figure 2 est une vue de face, illustrant à plus grande échelle la partie aval du dispositif d'écoulement microfluidique de la figure 1 ;
- les figures 3 à 7 sont des vues de face, analogues à la figure 2, illustrant différentes variantes de réalisation de l'invention ;
- la figure 8 est une vue de face, à plus grande échelle, illustrant en service la partie amont du dispositif de la figure 1 ;

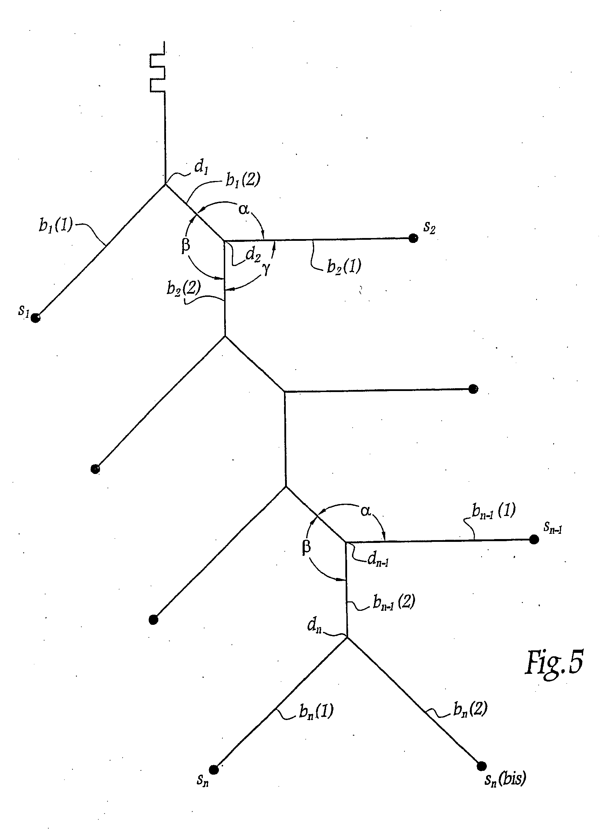

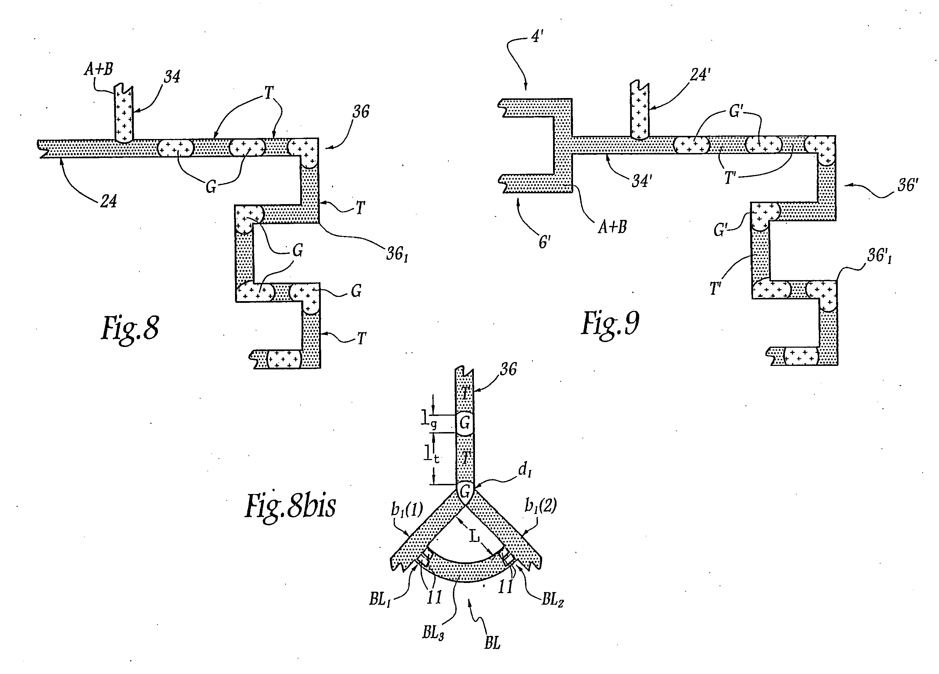

- la figure 8bis est une vue de face, illustrant une variante du dispositif de la figure 5, dans laquelle s'écoulent les gouttes et les tronçons représentés sur la figure 8 ;
- la figure 9 est une vue de face, analogue à la figure 8, illustrant la partie amont d'un dispositif d'écoulement microfluidique conforme à une autre variante de réalisation de l'invention ;

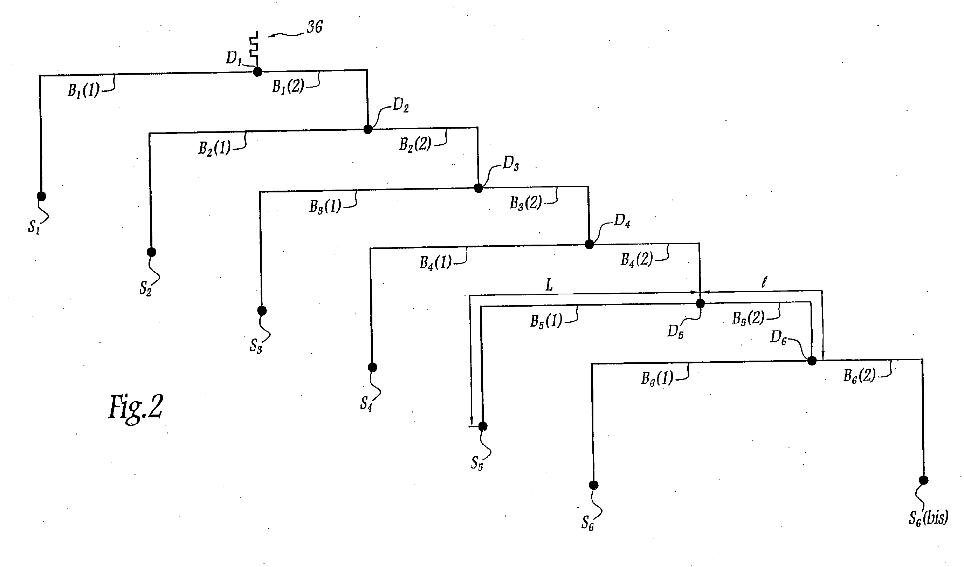

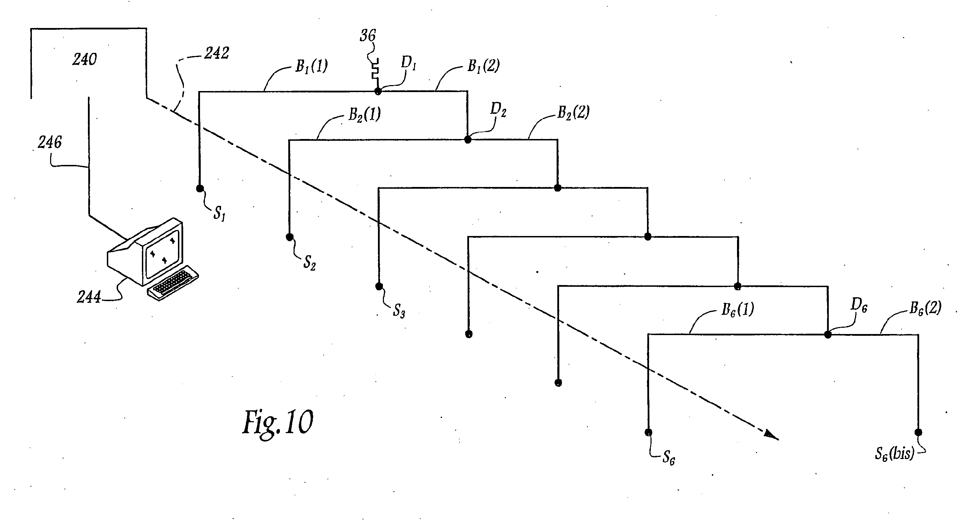

- la figure 10 est une vue de face, illustrant le dispositif de la figure 2 en service ;

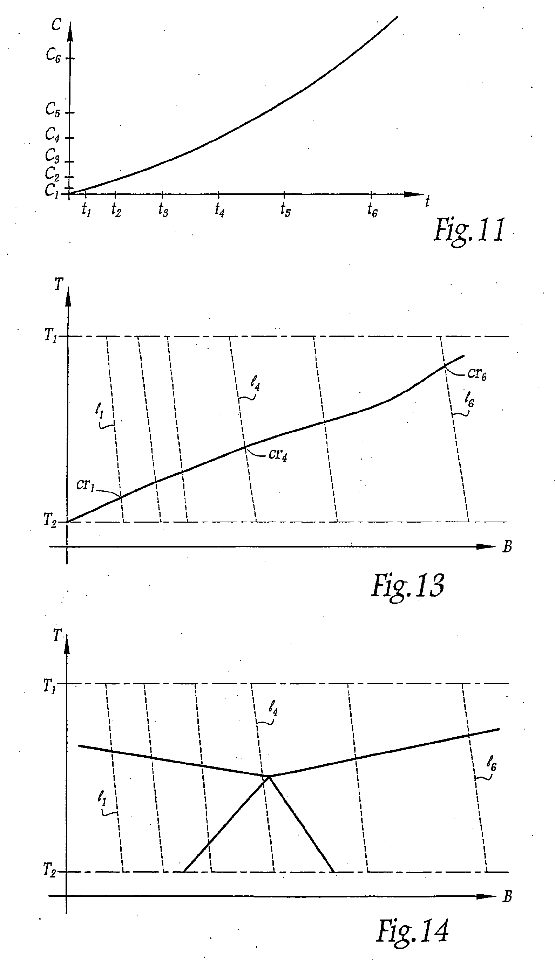

- la figure 11 est un graphe, obtenu par la mise en oeuvre du dispositif d'écoulement microfluidique de la figure 10 ;

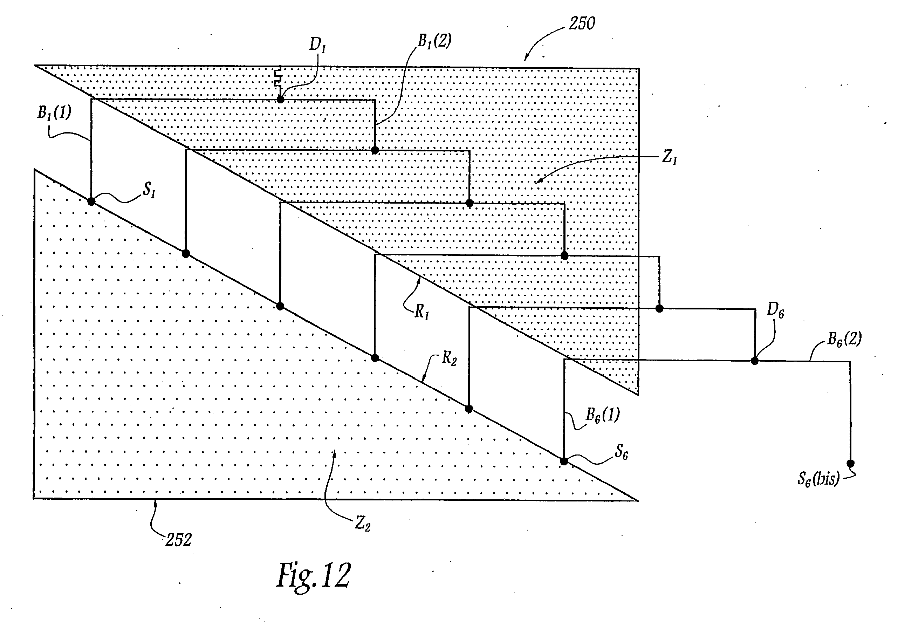

- la figure 12 est une vue de face, analogue à la figure 10, illustrant une variante de réalisation du dispositif d'écoulement microfluidique de cette figure 10 ; et
- les figures 13 et 14 sont des diagrammes, respectivement de solubilité et de phases, obtenus par la mise en oeuvre du dispositif d'écoulement microfluidique de la figure 12.

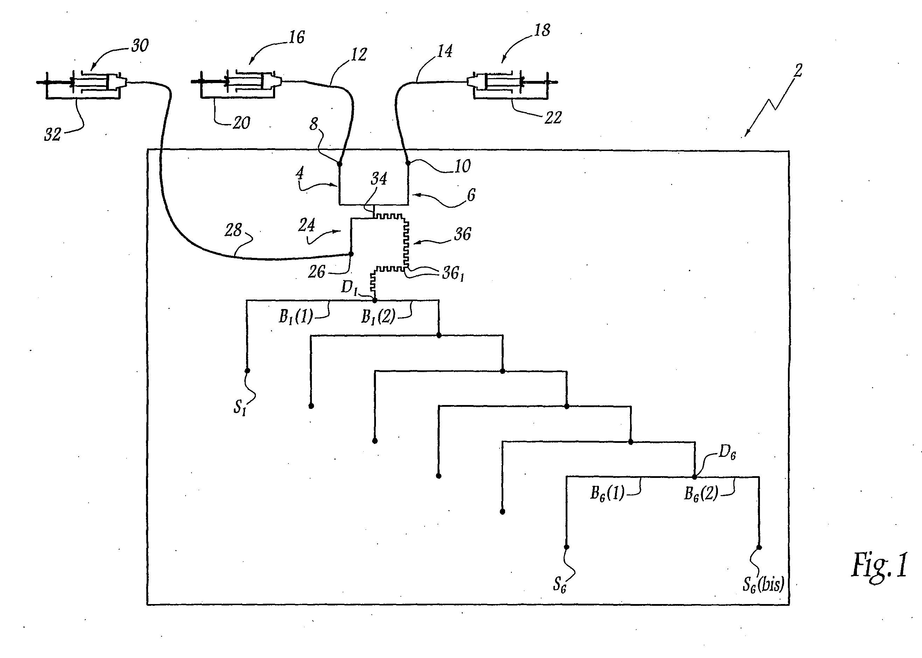

Le dispositif d'écoulement microfluidique conforme à l'invention, qui est représenté sur la figure 1, comprend tout d'abord un corps 2, formant une plaquette. Cette dernière peut être réalisée de façon connue en soi en poly (dyméthylsiloxane), ou PDMS. A titre d'alternative, on peut cependant prévoir d'utiliser un autre matériau, tel que par exemple du verre. Différents microcanaux sont gravés dans cette plaquette 2, également de manière classique.

Cette plaquette possède une longueur typique de 75 mm, une largeur typique de 50 mm, ainsi qu'une épaisseur typique de 1 mm. Par ailleurs, les différents microcanaux évoqués ci-dessus possèdent une section typique comprise entre quelques micromètres et le millimètre, notamment voisine de 50 micromètres.

De façon plus précise, il est tout d'abord prévu deux microcanaux 4 et 6 d'amenée de deux composants, possédant chacun une forme de L. Chaque microcanal est associé à une entrée 8 et 10, propre à recevoir une première extrémité d'un tube 12 ou 14, dont l'autre extrémité est reliée à une seringue 16 ou 18. Le débit de fluide administré par chaque seringue est par ailleurs contrôlé grâce à un pousse-seringue 20 ou 22.

La plaquette 2 est en outre creusée d'un microcanal 24, permettant l'amenée d'une phase porteuse. De façon analogue à ce qui a été décrit ci-dessus, ce microcanal 24 est associé à une entrée 26, à un tube 28, à une seringue 30, ainsi qu'à un pousse-seringue 32. Les différents organes mécaniques 8 à 22, ainsi que 26 à 32, qui sont de type connu en soi, ne seront pas décrits plus en détail dans ce qui suit.

Les deux microcanaux 4 et 6 se rejoignent tout d'abord en un microcanal intermédiaire 34, vertical sur la figure 1, qui débouche lui-même dans le microcanal 24, permettant l'amenée de la phase porteuse. En aval de cette zone de jonction, il est ainsi formé un microcanal 36, dit d'écoulement. On notera que ce microcanal 36 est pourvu d'une succession de replis $36_1$, qui modifient l'écoulement intérieur des réactifs et permettent ainsi de mélanger ces derniers, comme on le verra plus en détail dans ce qui suit.

Le microcanal d'écoulement 36 débouche, à son extrémité aval, dans une dérivation $D_1$, à partir de laquelle s'étendent deux branches en forme de L. Ces dernières sont dénommées branches dérivées d'ordre 1, et sont affectées des références $B_1(1)$ et $B_1(2)$.

On notera que seule l'une $B_1(2)$ de ces branches dérivées d'ordre 1 se divise à son tour, au niveau d'une dérivation $D_2$, en deux branches dérivées d'ordre 2, notées $B_2(1)$ et $B_2(2)$. En revanche, l'autre $B_1(1)$ bran-

che dérivée d'ordre 1 est directement reliée à une sortie $S_1$.

De la même façon, pour chaque ordre n, l'une $B_n(1)$ des branches dérivées est directement reliée à une sortie correspondante $S_n$, alors que l'autre $B_n(2)$ branche dérivée se divise, au niveau d'une dérivation $D_{n+1}$, en deux branches dérivées d'ordre (n+1). On retrouve ainsi à chaque fois uniquement deux branches dérivées d'un même ordre, qui sont notées $B_n(1)$ et $B_n(2)$, où n varie de 1 à 6.

A l'ordre 6, qui correspond à l'extrémité aval du réseau, les deux branches sont identiques, la branche $B_6(2)$ étant reliée à une sortie correspondante $S_6$(bis). Comme on le verra de façon plus précise dans ce qui suit, la valeur de l'ordre maximal, correspondant à celui des branches dérivées aval $B_6(1)$ et $B_6(2)$, influe sur le temps de séjour. Dans cette optique, il est avantageux que cet ordre maximal soit supérieur à 4, de préférence à 7. Il apparaît de ce qui précède que le dispositif conforme à l'invention comprend un unique microcanal d'écoulement, ainsi que différentes sorties prévues en un nombre supérieur à 1, en l'occurrence égal à (n+1), où n est l'ordre maximal de l'arborescence définie par les différentes branches dérivées.

Comme le montrent ces figures 1 et 2, l'agencement des différentes branches dérivées $B_1$ à $B_6$ est globalement dissymétrique, notamment par rapport à un axe vertical médian. Il est cependant à souligner que ce caractère dissymétrique peut également être induit par la taille des canaux. En d'autres termes, un agencement peut être dissymétrique au sens de l'invention, quand bien même les différentes branches dérivées sont géométriquement symétriques par rapport à l'axe vertical précité, dans la mesure où les sections de passage des branches d'un même ordre sont différentes.

On notera que les différentes branches dérivées de cet exemple de réalisation présentent globalement une forme de L. Ainsi, en référence notamment à la figure 2, chaque branche présente une partie horizontale, s'étendant à partir de la dérivation amont, qui est prolongée par une branche verticale débouchant dans la dérivation aval ou dans la sortie correspondante. On notera également que les différentes branches dérivées du dispositif sont situées dans un même plan, qui correspond à celui de la plaquette 2.

On soulignera que l'agencement de ces figures 1 et 2 est, de manière avantageuse, équilibré en termes de pertes de charge. A cet effet, chaque branche dérivée non divisée $B_n(1)$, où n=1 à 5, présente une longueur L, alors que chaque branche dérivée divisée $B_n(2)$ présente une longueur $\underline{l}$, où $L = 2\underline{l}$.

En d'autres termes, les branches non divisées sont deux fois plus longues que les branches divisées. On notera que ces longueurs prennent en compte les portions horizontales et verticales de chaque branche.

Dans ces conditions, les pertes de charge entre, d'une part, chaque dérivation $D_1$ à $D_6$ et, d'autre part, la ou chaque sortie auxquelles cette dérivation est reliée, sont sensiblement identiques. Ainsi, pour la dérivation $D_6$, les deux pertes de charge entre, d'une part, $D_6$ et $S_6$ et, d'autre part, $D_6$ et $S_6$(bis) sont égales. De la même façon, les trois pertes de charge entre respectivement, $D_5$ et $S_5$, $D_5$ et $S_6$ ainsi que $D_5$ et $S_6$(bis) sont également identiques.

De proche en proche, on note que, pour $D_1$, les pertes de charge entre $D_1$ et $S_n$, où n = 1 à 6, ainsi qu'entre $D_1$ et $S_6$(bis) sont également identiques. Cette mesure permet d'équilibrer, de manière satisfaisante, les pertes de charge associées au dispositif de ces figures 1 et 2.

Dans le mode de réalisation de la figure 1, au niveau de chaque dérivation $D_1$ à $D_6$, le flux s'écoule de manière également répartie dans chacune des deux branches, s'étendant à partir de la dérivation considérée. En d'autres termes, le débit de fluide s'écoulant dans chaque branche du même ordre est sensiblement identique.

Cependant, à titre de variante non représentée, on peut prévoir que le débit de fluide s'écoulant dans la branche non divisée, à savoir reliée directement à une sortie, est supérieur à celui s'écoulant dans la branche divisée. Comme cela apparaîtra plus clairement dans ce qui suit, cette mesure permet d'augmenter encore le temps de séjour du fluide, s'écoulant au sein des différentes branches divisées.

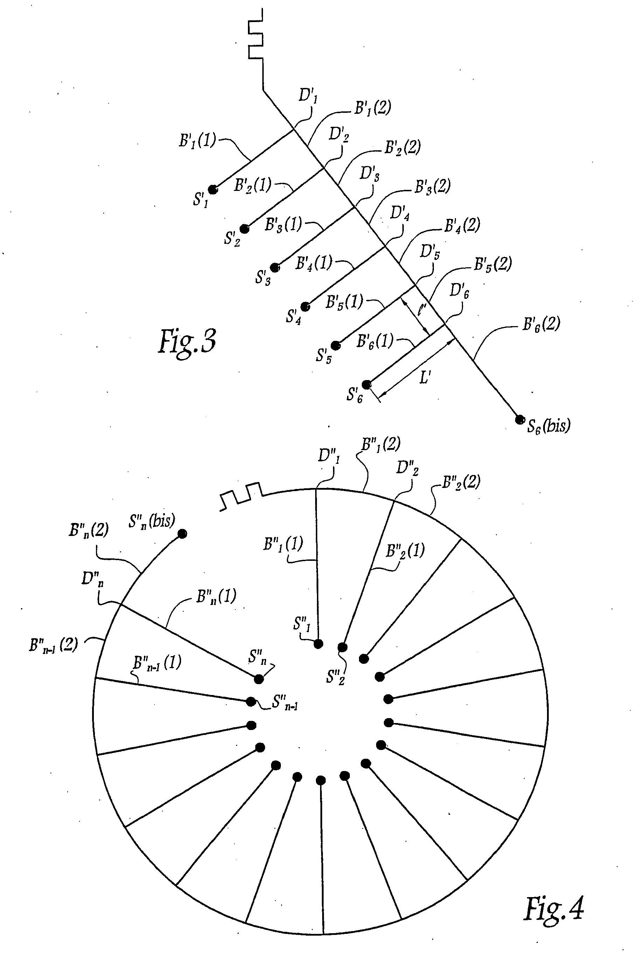

La figure 3 illustre une variante de réalisation de l'installation représentée aux figures 1 et 2. Sur cette figure 3, les éléments mécaniques analogues à ceux des figures 1 et 2 y sont désignés par les mêmes numéros, affectés de la référence « prime ».

L'installation de la figure 3 diffère de celle décrite en référence aux figures 1 et 2, en ce que les différentes branches dérivées $B'_1$ à $B'_6$ sont rectilignes. Ces branches dérivées s'étendent de manière oblique, en reliant une dérivation donnée, soit à une autre dérivation, soit à une sortie. De plus, les branches divisées $B'_1(2)$ à $B'_6(2)$ s'étendent dans le prolongement les unes des autres.

Comme dans l'exemple précédent, les branches dérivées $B'_1(1)$ à $B'_6(1)$, qui sont reliées directement à une sortie $S'_1$ à $S'_6$, possèdent une longueur L' qui est deux fois plus importante que la longueur $\underline{1}$' des branches $B'_1(2)$ à $B'_6(2)$ qui se divisent en deux branches aval d'ordre supérieur. Le mode de réalisation de cette figure 3 est avantageux, en ce sens que les branches dérivées sont particulièrement simples à réaliser, du fait de leur profil rectiligne.

Selon une variante non représentée de la figure 3, les différentes branches non divisées $B'_1(1)$ à $B'_6(1)$ peuvent ne pas s'étendre d'un même côté, en l'occurrence en bas à gauche sur cette figure 3. Dans cette optique, ces différentes branches, reliées directement à une sortie, peuvent par exemple s'étendre, de façon alternée, de part et d'autre d'un axe principal médian de l'installation.

La figure 4 illustre une variante supplémentaire de réalisation. Sur cette figure, les éléments mécaniques analogues à ceux des figures 1 et 2 sont désignés par les mêmes numéros, affectés de la référence « seconde ».

Sur cette figure 4, on note $B''_1(1)$ à $B''_n(1)$ les différentes branches dérivées non divisées, à savoir reliées directement aux sorties $S''_1$ à $S''_n$. Ces branches $B''_1(1)$ à $B''_n(1)$, qui sont rectilignes, forment des portions de rayons d'un cercle, dont les contours sont délimités par les autres branches dérivées divisées $B''_1(2)$ à $B''_n(2)$.

On notera donc que, dans ce mode de réalisation, les différentes sorties $S''_1$ à $S''_n$ sont adjacentes les unes aux autres, dans la mesure où elles sont situées au voisinage du centre du cercle précité. Dans un mode de réalisation particulièrement avantageux, non représenté, les différentes sorties des branches dérivées débouchent dans un unique orifice. Ceci permet d'appliquer une unique pression de sortie à toutes ces branches dérivées, de sorte que les différences de pression au sein de ces branches sont parfaitement maîtrisées.

A titre de variante non représentée de la figure 4, les différentes branches dérivées rectilignes peuvent s'étendre, non plus vers l'intérieur, mais vers l'extérieur du cercle formé par les branches dérivées curvilignes.

La figure 5 illustre une variante supplémentaire de réalisation de l'installation représentée aux figures 1 et 2. Sur cette figure 5, les éléments mécaniques analogues à ceux des figures 1 et 2 y sont affectés des mêmes références, à l'exception que les lettres majuscules sont remplacées par des lettres minuscules.

Sur cette figure 5, on note $\alpha$ et $\beta$ les angles entre chaque branche divisée amont $b_i(2)$, où i varie de 1 à (n-1), et chaque branche aval respective $b_{i+i}(1)$ et $b_{i+1}(2)$. On note par ailleurs $\gamma$ l'angle entre les deux branches aval précitées.

Dans cette variante de réalisation, ces angles $\alpha$ et $\beta$ sont égaux, en l'occurrence d'une valeur de 135°, alors que $\gamma$ est un angle droit. Cette mesure est avantageuse, parce qu'elle évite la formation de points de stagnation de l'écoulement. En effet, étant donné l'égalité entre les angles $\alpha$ et $\beta$, l'écoulement se répartit de façon particulièrement satisfaisante entre les deux branches aval précitées, sans occurrence d'un tel phénomène de stagnation.

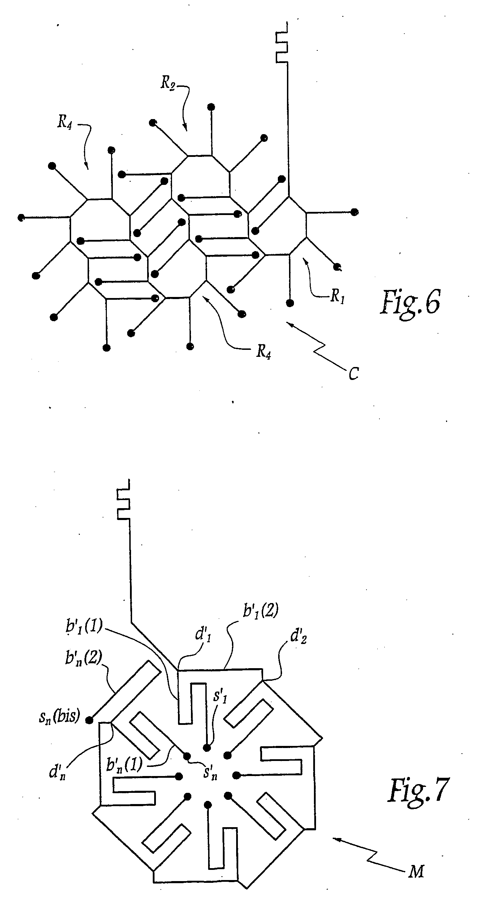

La figure 6 consiste en la réplication du motif, illustré à la figure 5. De façon plus précise, si l'on nomme C le canal principal, formé par les différentes branches dérivées, ce canal possède un certain nombre de replis, notés $R_1$ à $R_4$.

A cet égard, on peut souligner que des branches dérivées d'un premier repli s'étendent au voisinage de branches dérivées d'un repli adjacent, parallèlement à celles-ci. Ceci est avantageux, puisque cette mesure permet de réduire l'encombrement global de l'installation.

La figure 7 illustre une variante supplémentaire de réalisation de l'invention. Sur cette figure, les éléments mécaniques analogues à ceux de la figure 5 portent les mêmes numéros, affectés de la référence « prime ».

L'arborescence formée par les différentes branches dérivées de cette figure 7 présente à peu près une forme de cercle. Cependant, à la différence de la figure 4, ces branches dérivées $b''_1(2)$ à $b'_n(2)$ sont rectilignes, et non pas curvilignes, de sorte qu'elles forment des cordes d'un cercle non représenté, inscrit à la périphérie de ces différentes branches.

Par ailleurs, les différentes sorties $s'_1$ à $s'_n$ des branches non divisées $b'_1(1)$ à $b'_n(1)$ sont prévues au voisinage les unes des autres, comme dans l'exemple de la réalisation de la figure 4. A cet égard, on peut noter que ces différentes sorties peuvent déboucher dans un orifice unique, comme explicité ci-dessus en référence à la figure 4. Cependant, contrairement au mode de réalisation de la figure 4, ces branches dérivées non divisées ne sont pas rectilignes, dans la mesure où elles sont repliées sur elles-mêmes, à la manière d'un S, ce qui est avantageux en termes d'encombrement.

Les différentes branches de l'installation de la figure 7 forment un motif globalement circulaire, noté M. On notera que, à titre de variante non représentée, la branche terminale $b'_n(2)$ peut ne pas être reliée à la sortie $s'_n(bis)$, mais se prolonger en d'autres branches dérivées, divisées et non divisées, qui forment un autre motif, analogue à celui M précité.

La figure 8 illustre la mise en oeuvre du dispositif des figures 1 et 2, en ce qui concerne la partie amont de ce dernier, à savoir jusqu'à l'extrémité aval du microcanal d'écoulement 36. Il doit être entendu que la mise en oeuvre des dispositifs des figures 3 à 7 est analogue à ce qui va être expliqué dans ce qui suit.

Il s'agit tout d'abord d'introduire, par les entrées 8 et 10, deux composants notés A et B, qui sont par exemple des réactifs, tous deux liquides. A titre de variante, au moins l'un des deux composants peut cependant être gazeux.

Ces deux composants s'écoulent alors dans les microcanaux respectifs 4 et 6, puis dans le microcanal intermédiaire 34. Etant donné la nature même de ce microcanal 34, en particulier ses dimensions, les deux composants s'y écoulent sensiblement sans subir de mélange.

En effet, dans ce microcanal 34, un mélange peut uniquement intervenir par diffusion moléculaire. Dans ces conditions, si ce microcanal 34 est suffisamment court, les molécules des deux composants ne disposent du temps nécessaire pour diffuser, de sorte que les flux ne s'interpénètrent pas. Cependant, il peut être avantageux, à titre de variante non représentée, d'adjoindre un fluide neutre conformément à l'enseignement de Ismagilov et A1.

Par ailleurs, on introduit par l'entrée 26 une phase porteuse liquide, qui n'est pas miscible avec les réactifs A et B. Le débit des deux réactifs est avantageusement compris entre 0,1 microlitre/heure et 1000 microlitres/heure, alors que le débit de la phase porteuse est avantageusement compris entre 0,1 microlitre/heure et 100 000 microlitres/heure.

Etant donné que ces réactifs ne sont pas miscibles avec cette phase porteuse, en aval de la jonction entre les microcanaux 24 et 34, il se forme une succession de gouttes G, constituant des entités dispersées, dont chacune se compose d'un mélange des deux réactifs A et B. Deux gouttes successives sont séparées par un tronçon T de la phase porteuse. Il est à noter quel, dans le cas où A et B sont gazeux, les entités dispersées évoquées ci-dessus sont, non plus des gouttes, mais des bulles.

Comme le montre la figure 8, les gouttes G occupent toute la section du microcanal d'écoulement 36, de sorte que l'ensemble des constituants, à savoir ces gouttes et la phase porteuse, possèdent la même vitesse. Au sein de ce microcanal 36, l'écoulement est ainsi de type bouchon, ou piston.

En amont du microcanal 36, les réactifs A et B constituant chaque goutte sont peu, voire pas du tout mélangés. Puis, au fur et à mesure de leur progression, les gouttes G sont soumises à des modifications de leur écoulement intérieur, grâce aux parois des replis $36_1$, dont est pourvu ce microcanal 36. Ceci contribue donc à homogénéiser chaque goutte lors de son trajet de sorte que, au voisinage de la première dérivation $D_1$, les réactifs A et B sont bien mélangés au sein de chaque goutte G.

A la lecture de ce qui précède, on notera tout d'abord que les microcanaux 4, 6 et 34 forment des moyens d'introduction des composants, destinés à former le mélange susceptible de s'écouler dans l'arborescence définie en aval de la dérivation $D_1$. Par ailleurs, les microcanaux 24 et 34, associés aux replis $36_1$ du microcanal d'écoulement 36, constituent des moyens de formation de ce mélange, qui sont placés en amont de cette dérivation $D_1$.

La figure 9 illustre une variante de réalisation de l'invention. Dans cette variante, on retrouve deux microcanaux 4' et 6' d'amenée de réactifs, qui se rejoignent en un microcanal intermédiaire 34'. Il est par ailleurs prévu un microcanal 24' d'amenée d'un fluide auxiliaire. Ces microcanaux 24' et 34' se rejoignent en un unique canal d'écoulement 36', pourvu de replis $36'_1$.

Contrairement à l'exemple de réalisation de la figure 8, les deux réactifs A et B, introduits dans les microcanaux 4' et 6', appartiennent à la phase porteuse. Ainsi, dans le microcanal d'écoulement 36', en supposant que le fluide auxiliaire est un liquide, il se forme une succession de gouttes G', définissant des tronçons séparés T' de phase porteuse, dont chacun est formé d'un mélange des réactifs A et B. Comme dans l'exemple précédent, il se produit un mélange de ces réactifs A et B le long du microcanal d'écoulement 36', en particulier grâce à la présence des replis $36'_1$.

On notera que, pour les deux exemples illustrés en référence aux figures 8 et 9, la phase porteuse liquide est celle qui mouille le mieux les parois du microcanal d'écoulement 36 ou 36'. Le fait de former des entités dispersées est avantageux, dans la mesure où cela permet d'augmenter la précision de l'analyse, mise en oeuvre en aval.

La figure 8bis illustre, à plus grande échelle, une variante de réalisation du dispositif illustré sur la figure 5. Il s'agit plus précisément d'une vue agrandie de la partie amont de ce dispositif, de sorte qu'on retrouve le microcanal d'écoulement 36, la première dérivation $d_1$, ainsi que les deux branches dérivées d'ordre 1, à savoir $b_1(1)$ et $b_1(2)$.

Au voisinage de cette dérivation $d_1$, les deux branches dérivées sont reliées par une branche supplémentaire, dite de liaison, qui est affectée de la référence BL. De façon avantageuse, chaque couple de branches dérivées $b_i(1)$ et $b_i(2)$, où i varie de 2 à n sur cette figure 5, est également pourvu d'une telle branche de liaison. A cet égard, on notera que de telles branches de liaison sont susceptibles d'équiper l'ensemble des dispositifs décrits en référence aux figures annexées.

En revenant à la figure 8bis, la section transversale de la branche de liaison BL est analogue à celle des deux branches dérivées $b_1(1)$ et $b_1(2)$. Cependant, à ses deux extrémités, c'est-à-dire au voisinage de son intersection avec chacune de ces branches dérivées, la branche de liaison BL présente une section transversale sensiblement inférieure à celle des branches dérivées précitées.

A cet effet, deux paires de plots 11, formant des obstacles, sont prévues au voisinage de l'intersection de la branche de liaison BL et de chacune des branches dérivées d'ordre 1. Cependant, à titre de variante, on peut envisager d'autres moyens permettant de réduire localement la section transversale de cette branche de liaison BL. Ainsi, à titre d'exemple non limitatif, cette dernière peut être pourvue de deux goulets d'étranglement, à chacune de ses extrémités.

On suppose désormais que, conformément à ce qui a été décrit en référence à la figure 8, une succession de gouttes G et de tronçons T de phase porteuse s'écoulent dans le microcanal amont 36, puis dans les deux branches dérivées d'ordre 1, $b_1(1)$ et $b_1(2)$. Dans ces conditions, les dimensions transversales de la branche de liaison BL, au niveau des plots 11, sont telles qu'elles autorisent uniquement le passage de la phase porteuse, mais qu'elles bloquent en revanche le passage des gouttes G.

Ainsi, dans l'exemple de la figure 8bis, la branche de liaison BL peut être divisée en trois tronçons. Il s'agit tout d'abord de deux tronçons d'extrémité $BL_1$ et $BL_2$, dont la section transversale est faible, de façon à empêcher le passage des gouttes G. Par ailleurs, on retrouve une portion médiane $BL_3$, dont la section de passage est à nouveau plus large, de manière à présenter une faible résistance hydrodynamique.

On note L la distance entre les parois en regard de la dérivation $d_1$ et de la branche de liaison BL. On note par ailleurs 1g la longueur d'une goutte, ainsi que lt la distance séparant bord à bord deux gouttes, à savoir la longueur du tronçon T de phase porteuse.

Lorsqu'une goutte donnée atteint la dérivation $d_1$, il est avantageux que celle qui la précède n'ait pas encore dépassé la branche de liaison BL. Puisque la phase porteuse se répartit de façon égale dans les deux branches dérivées, la distance entre la goutte arrivant à la dérivation et celle au voisinage de la branche de liaison BL est égale à la moitié de l'espacement initial lt entre ces gouttes. Dans ces conditions, il est donc avantageux que L soit supérieur à la somme lg/2 + lt/2.

Par ailleurs, il est avantageux de disposer de gouttes suffisamment éloignées les unes des autres, afin de limiter le phénomène de coalescence. Dans ces conditions, il est avantageux qu'il y ait une unique goutte entre la dérivation $d_1$ et la branche de liaison BL, dans une branche dérivée considérée. Ceci correspond à une distance L inférieure à la somme 1g + 1t.

En résumé, de façon avantageuse, L, lg et lt sont tels que :

$$(lg+lt)/2 \leq L \leq lg+lt.$$

A titre d'exemple non limitatif, si l'on choisit de former des gouttes dont la longueur est de l'ordre de 200 micromètres, la distance L est alors voisine de 450 micromètres.

La présence de branches de liaison, telles que celle BL de la figure 8bis, induit des avantages spécifiques.

Ainsi, elle assure tout d'abord une répartition satisfaisante des gouttes en aval de la dérivation $d_1$, à savoir que ces gouttes ont tendance à s'écouler de façon alternée dans l'une puis l'autre des branches dérivées. Ceci permet donc d'éviter la formation de trains de gouttes, qui correspondent à l'écoulement de plusieurs gouttes successives dans une même branche dérivée. Cette répartition alternée des gouttes autorise une arrivée régulière de celles-ci au niveau des points d'analyse, ce qui garantit la qualité de cette dernière. En particulier, il est possible de procéder à des moyennes, en termes d'analyse.

Par ailleurs, l'existence de branches de liaison évite dans une large mesure les phénomènes de coalescence, qui correspondent au rapprochement puis à la fusion de deux gouttes initialement séparées. Ceci permet de conférer une grande précision à l'analyse ainsi réalisée, en évitant tout mélange de gouttes ayant des histoires chimiques différentes et/ou des compositions différentes.

Enfin, la présence de branches de liaison permet à toutes les gouttes de s'écouler dans l'ensemble du dispositif microfluidique, même lorsque celui-ci présente une géométrie complexe. En d'autres termes, ces branches de liaison permettent d'améliorer l'alimentation en gouttes de l'ensemble des sorties du dispositif.

La figure 10 illustre la mise en oeuvre du dispositif des figures 1 et 2, dans sa partie située en aval de la première dérivation $D_1$. On supposera qu'une succession de gouttes G, dont chacune est formée d'un mélange homogène des deux réactifs A et B, s'écoulent dans cette première dérivation $D_1$, comme expliqué en référence à la figure 8.

Immédiatement en aval de cette première dérivation $D_1$, les différentes gouttes G se répartissent, à savoir que sensiblement la moitié de celles-ci s'écoule dans chaque branche dérivée d'ordre 1, à savoir $B_1(1)$ ou $B_1(2)$. On conçoit donc que, dans chacune de ces deux branches, la vitesse des gouttes est égale à la moitié de celle qu'elles possédaient dans le microcanal d'écoulement 36.

De la même façon, dans chaque branche dérivée d'ordre 2, à savoir $B_2(1)$ ou $B_2(2)$, la vitesse de ces gouttes est divisée par quatre, par rapport à celle qu'elles possédaient dans ce microcanal 36. De façon générale, pour un ordre n considéré, la vitesse des gouttes est diminuée d'un facteur $2^n$ par rapport à celle qu'elles possédaient dans le microcanal 36. Ainsi, dans chaque branche dérivée d'ordre 6, à savoir $B_6(1)$ ou $B_6(2)$, la vitesse des gouttes est soixante-quatre fois plus faible que dans le microcanal d'écoulement 36.

On note alors $t_n$ les temps de séjour d'une goutte, entre l'extrémité aval du microcanal d'écoulement 36 et une sortie correspondante $S_n$. Ces temps de séjour divergent selon une suite géométrique d'ordre 2, répondant à l'équation suivante :

Pour n>1,

$$t_n = \left\{ \sum_{i=1}^{n-1} 2^{i-2} \right\} \cdot t_1 + 2^{n-1} \cdot t_1$$

Ainsi, dans l'exemple de la figure 10, une goutte évacuée du dispositif à la sortie $S_6$ ou $S_6$(bis) a séjourné près de cinquante fois plus longtemps qu'une goutte évacuée du dispositif au niveau de la première sortie $S_1$.

A cet égard, on soulignera qu'une goutte sortant en $S_6$, à savoir au niveau de la branche dérivée aval $B_6$(1), a parcouru une distance d'environ 7L/2. Cette goutte possède un temps de séjour environ 14 fois plus élevé qu'une goutte s'écoulant le long d'un canal de même longueur, à savoir 7L/2, mais dépourvu de dérivation.

On notera également que le dispositif de l'invention permet de transformer le temps en espace. De façon plus précise, dans le cas d'une réaction chimique intervenant entre les réactifs A et B, chaque endroit du réseau formé par les différentes branches dérivées représente un temps de réaction chimique et un seul.

Le dispositif de la figure 10 intègre en outre un appareil d'analyse 240, qui est en l'occurrence de type Raman. En service, cet analyseur 240 tire parti d'un faisceau laser 242, de manière connue en soi. Il est en outre relié à un ordinateur de traitement 244, par l'intermédiaire d'une ligne 246.

On supposer, dans le présent exemple, que les deux réactifs A et B réagissent de façon à former un composé noté C. Dans ces conditions, il s'agit de diriger le faisceau 242 de manière oblique, de sorte qu'il assure l'analyse des différentes branches dérivées non divisées, à savoir $B_1(1)$ à $B_6(1)$. On soulignera également que cette analyse est mise en oeuvre au voisinage des différentes sorties $S_1$ à $S_6$.

Dans ces conditions, pour chaque sortie, le faisceau détecte le passage de différentes gouttes de même composition, ce qui permet de moyenner la mesure ainsi faite et donc de lui conférer une bonne précision. De façon connue, l'analyseur Raman 240 mesure les concentrations en C, notées $C_1$ à $C_n$, au voisinage des différentes sorties $S_1$ à $S_n$, à savoir pour des temps de séjours compris entre $t_1$ et $t_n$.

L'ordinateur 244 permet alors d'accéder à la courbe, représentée à la figure 11, figurant l'évolution de la concentration en C en fonction du temps t. On retrouve les concentrations $C_1$ à $C_6$ évoquées ci-dessus, ainsi que les temps de séjour $t_1$ à $t_6$. La courbe ainsi obtenue permet de façon classique, moyennant un traitement mathématique approprié, de déterminer la constante cinétique $k_c$ de la réaction $A + B \rightarrow C$.

A titre de variante non représentée, l'invention peut tirer parti de moyens d'analyse, qui sont différents du Raman évoqué ci-dessus. Il est tout d'abord envisageable de faire appel à une caméra de type infra-rouge, propre à détecter la chaleur produite ou absorbée par la réaction aux différents temps de séjour $t_1$ à $t_n$. Ceci permet alors de déterminer l'enthalpie de la réaction considérée.

De plus, dans le cas où le composé C, formé lors de la réaction, est de type fluorescent, on peut utiliser un appareil d'analyse optique à fluorescence. Dans ces conditions, de façon connue, l'intensité lumineuse mesurée augmente au fur et à mesure de l'évolution de la réaction.

Dans l'exemple de la figure 10, la composition initiale de chaque goutte est invariante, dans la mesure où les débits respectifs en A en B sont maintenus constants. A titre d'alternative, il est cependant envisageable de modifier la composition initiale de chaque goutte avant même le début de la réaction, dont on supposera qu'elle est sensiblement instantanée. Dans ces conditions, au niveau de chaque sortie $S_1$ à $S_6$, il est possible de réaliser un échantillonnage en composition des gouttes.

En d'autres termes, si les gouttes sont à l'origine composées de B et que l'on augmente progressivement la concentration en A, la sortie $S_1$ correspondra à une goutte initiale sensiblement constituée du composant A, alors que la sortie $S_6$ correspondra sensiblement à une goutte initiale formée du composant B. Ceci permet d'identifier, en fonction des différentes compositions mesurées dans les sorties $S_1$ et $S_6$, quel pourcentage initial A et de B est le plus favorable pour la réaction.

La figure 12 illustre le dispositif de la figure 10, auquel sont associés des moyens permettant d'établir un gradient de conditions opératoires, en l'occurrence de température. De manière plus précise, il est tout d'abord prévu une source chaude 250, formée par tout moyen approprié, en l'occurrence un échangeur de chaleur tubulaire, ou un dispositif à effet Peltier.

Cette source chaude permet de maintenir une température sensiblement constante dans une zone $Z_1$, située en haut et à droite du réseau microfluidique, sur cette figure 12. De manière plus précise, cette zone chaude possède une bordure oblique $R_1$, qui s'étend le long des extrémités supérieures, c'est-à-dire amont, des parties verticales des différentes branches non divisées, à savoir $B_1(1)$ à $B_6(1)$.

Il est également prévu une source froide 252, réalisée également par tout moyen approprié, tel qu'un échangeur de chaleur tubulaire. Cette source froide permet de maintenir constante la température régnant dans une zone $Z_2$, située en bas et à gauche du réseau microfluidique.

Cette zone $Z_2$ possède en particulier une bordure oblique $R_2$, située parallèlement à celle de la zone $Z_1$, qui s'étend le long des sorties $S_1$ à $S_6$. En d'autres termes, cette bordure oblique de la zone froide $Z_2$ correspond à l'extrémité inférieure, c'est-à-dire aval, des différentes branches non divisées $B_1(1)$ à $B_6(1)$.

On note $T_1$ et $T_2$ les températures respectives, régnant dans les zone $Z_1$ et $Z_2$. Ces températures possèdent des valeurs typiques respectives d'environ 5 et 75°C, la différence entre ces températures étant avantageusement comprise entre 5 et 70°C.

Ainsi, il s'établit un gradient de température entre les extrémités respectivement amont et aval des parties verticales des différentes branches $B_1(1)$ à $B_6(1)$. Dans ces conditions, si l'on suppose que le composé B est soluble dans le composé A, il est possible d'accéder au diagramme de solubilité correspondant.

Ce diagramme est reproduit à la figure 13, où la concentration en B est portée en abscisses, alors que la température T est portée en ordonnées. On conçoit donc qu'il est possible d'accéder, grâce au dispositif de l'invention, au domaine situé entre les deux droites horizontales représentées en traits mixtes, qui correspondent respectivement aux températures $T_1$ et $T_2$ évoquées ci-dessus.

On note par ailleurs $l_1$ à $l_6$ les lignes pointillées correspondant à l'évolution de la concentration en B dans chaque branche $B_1(1)$ à $B_6(1)$. On notera que ces lignes sont légèrement obliques, dans la mesure où la concentration en B augmente vers l'extrémité aval de ces branches, ce qui s'accompagne d'une diminution de la température.

Par ailleurs, grâce à un moyen d'analyse approprié, qui est par exemple la spectroscopie Raman confocale, la microscopie optique entre analyseurs et polariseurs croisés, la diffusion dynamique de lumière ou les Rayons X, il est possible de détecter l'apparition de cristaux de B au niveau de chaque branche, lorsque la température diminue. De la sorte, on obtient différents points de la courbe, notés $cr_1$ à $cr_6$, correspondant à l'apparition de ces cristaux. Ceci permet alors d'accéder à la courbe de cristallisation de B dans A.

On notera qu'il est avantageux que la source chaude 250 soit disposée en amont du réseau microfluidique. En effet, ceci permet d'éviter la formation de cristaux dans cette zone amont, qui seraient de nature à obstruer l'écoulement dans les microcanaux.

A titre de variante non représentée, on peut supposer que la concentration en B est constante, au sein de chaque branche $B_1(1)$ à $B_6(1)$. Dans ces conditions, les lignes $l_1$ à $l_6$, tracées sur le graphe de la figure 13, ne s'étendent plus de manière oblique mais de façon verticale.

Il est possible d'utiliser le dispositif de la figure 12, afin d'obtenir des paramètres différents de la courbe de solubilité de la figure 13. Ainsi, ce dispositif permet d'accéder notamment à un diagramme de phases entre les deux réactifs A et B, qui est reproduit sur la figure 14.

On retrouve en abscisses la concentration en B, ainsi que la température T en ordonnées. Comme sur la figure 13, on a porté les valeurs de température $T_1$ et $T_2$, ainsi que les lignes obliques $l_1$ à $l_6$, relatives à l'évolution de la composition en B dans chaque branche $B_1(1)$ à $B_6(1)$.

Dans ces conditions il s'agit de détecter, par tout moyen approprié, l'apparition de phases différentes, telles que des arrangements spatiaux (phases micellaires, phases lamellaires, cubiques, hexagonales ou analogues) de systèmes de tensioactifs, polymériques, colloïdaux ou autres. Il est alors possible de tracer les différentes parties du diagramme de phases de cette figure 14.

Il convient de souligner que, selon l'invention, il est possible d'appliquer un gradient pour des conditions opératoires, qui sont différentes de la température. On citera notamment, de façon non limitative, l'humidité, la pression ou encore la tension électrique.

Par ailleurs, les différents exemples explicités ci-dessus font intervenir uniquement deux réactifs. Il doit cependant être entendu que l'invention trouve son application à un nombre supérieur de réactifs, en particulier égal à trois ou quatre.

En outre, ces différents exemples font appel à des entités dispersées, à savoir des bulles ou des gouttes, dont la composition est mesurée dans les différentes branches dérivées. Cependant, à titre de variante, il est à souligner qu'il est possible, conformément à l'invention, de faire s'écouler un flux continu dans ces branches dérivées, afin d'en analyser la composition. On conçoit que ce mode de réalisation ne fait en particulier pas intervenir le microcanal 24, permettant l'amenée de la phase porteuse.

L'invention permet de réaliser les objectifs précédemment mentionnés.

Il convient tout d'abord de souligner qu'il est du mérite de la Demanderesse, d'avoir relevé que l'agencement proposé par ISMAGILOV et al est peu satisfaisant, dans la mesure où il n'autorise pas un temps de séjour suffisant des réactifs. En effet, dans ISMAGILOV et al, le temps de séjour est limité par la longueur du microcanal où s'écoulent les réactifs, dont on rappellera qu'il ne comporte aucune dérivation. Dans ces conditions, sauf à faire appel à un dispositif dont l'encombrement est déraisonnable, ce temps de séjour est relativement peu important, de sorte que l'étude correspondante des réactions s'avère incomplète.

En revanche, grâce à l'invention, le temps de séjour des réactifs est particulièrement élevé, sans cependant augmenter de façon inacceptable l'encombrement du dispositif. A cet égard, la présence des différentes dérivations est tout particulièrement avantageuse, puisqu'elle permet d'augmenter de façon substantielle ce temps de séjour, sans pour autant nécessiter de grandes longueurs de microcanaux.

On soulignera que, conformément à l'invention, la structure des branches dérivées est telle que le temps d'écoulement le plus long, que l'on trouve dans le dispositif, augmente plus rapidement que de manière linéaire avec la longueur totale de ces branches, à section et débit d'entrée constants. Ainsi, dans les différents exemples décrits et représentés, ce temps de séjour varie de façon exponentielle par rapport à la longueur totale des branches dérivées.

Le caractère dissymétrique du dispositif de l'invention présente des avantages spécifiques. En effet, il fait appel à un nombre restreint de microcanaux, ce qui permet d'en réduire l'encombrement global, sans cependant restreindre les possibilités offertes par ce dispositif. Par ailleurs, grâce à cet agencement, il est possible de récupérer aux sorties successives $S_1$ à $S_6$ des mélanges réactionnels dont les compositions sont différentes, étant donné que leurs temps de séjour ne sont pas identiques.

Faire appel à des moyens d'analyse optique, par exemple de type Raman, infrarouge ou encore à fluorescence, est également avantageux. En effet, ceci permet d'éviter une instrumentation trop lourde de l'ensemble du dispositif.

Un exemple de réalisation, de l'invention va être décrit ci-après.

On utilise le dispositif décrit en référence aux figures 1 et 2. On admet deux solutions aqueuses de $K_4Fe_{II}(CN)_6$ et de $K_3Fe_{III}(CN)_6$ à des débits respectifs de 100 microlitres/heure et 100 microlitres/heure. Ces deux fluides sont susceptibles d'interdiffuser l'un dans l'autre lorsqu'ils se rencontrent.

Par ailleurs, on admet une phase porteuse qui est l'huile de silicone, à un débit de 200 microlitres/heure. Dans ces conditions, il se forme une succession de gouttes, dont chacune est composée initialement de 50 % en volume de $K_9Fe_{II}(CN)_6$, ainsi que de 50 % en volume de $K_3Fe_{III}(CN)_6$.

On mesure par spectographie RAMAN l'état de mélange d'une goutte à différents temps dans le canal. Ces mesures ont été effectuées dans la section 36 de la figure 1 ainsi qu'aux sorties $B_1(1)$ à $B_1(6)$ de la figure 2.

Le mélange est déterminé par la mesure des concentrations en $K_4Fe_{II}(CN)_6$ et $k_3Fe=_{III}(CN)_6$ à différentes positions dans le canal. La mesure RAMAN est très bien résolue spatialement, ce qui permet de positionner le faisceau dans une région de 5 micromètres carrés dans le canal.

Les valeurs des rapports de concentration de $K_4Fe_{II}(CN)_6$ par rapport à $K_3Fe_{III}(CN)_6$ à trois positions successives du canal 36 sont :

$K_4Fe_{II}(CN)_6/K_3Fe_{III}(CN)_6 = 7$
$K_4Fe_{II}(CN)_6/K_3Fe_{III}(CN)_6 = 1.6$
$K_4Fe_{II}(CN)_6/K_3Fe_{III}(CN)_6 = 1$

On démontre par cette expérience que le mélange à l'intérieur de la goutte est rapidement fait lorsqu'une goutte est forcée à s'écouler dans un système coudé. La méthode de détection RAMAN permet d'accéder à des renseignements relatifs à la mobilité, à la diffusion ainsi qu'aux mélanges d'espèces moléculaires à l'intérieur de microgouttes. Ces gouttes sont produites à des cadences du kilohertz et se déplacent à des vitesses de l'ordre du centimètre/seconde.

On suppose que le temps de séjour $t_1$ de chaque goutte, au niveau de la sortie $S_1$, est de 1 seconde. Dans ces conditions, les temps de séjour respectifs dans les autres sorties $S_2$ à $S_6$ sont :

$t_2$ : 2.5 secondes
$t_3$ : 5.5 secondes
$t_4$ : 11.5 secondes
$t_5$ : 23.5 secondes
$t_6$ : 47.5 secondes

On mesure, par spectographie RAMAN, les différents rapports de concentration de $K_4Fe_{II}(CN)_6$ par rapport à $K_3Fe=_{II}(CN)_6$ qui sont notées $R_1$ à $R_6$. les valeurs de ces rapports de concentration sont les suivants :

$R_1$ : 1
$R_2$ : 1
$R_3$ : 1
$R_4$ : 1
$R_5$ : 1
$R_6$ : 1

La goutte mélangée dans la région coudée 36 du dispositif microfluidique, reste mélangée tout au long du chemin.

## Revendications

1. Dispositif d'écoulement microfluidique en vue d'accéder à des paramètres d'une transformation physique et/ou chimique, comprenant un corps (2), au moins un microcanal (36) d'écoulement d'un mélange (G ; T') d'au moins deux composants, ménagé dans ce corps (2), le ou chaque microcanal d'écoulement (36) débouchant dans au moins une dérivation ($D_1$-$D_6$ ; $D'_1$-$D'_6$ ; $D''_1$-$D''n$ ; $d_1$-$d_n$ ; $d'_1$-$d'_n$), permettant de créer une arborescence comprenant plusieurs branches dérivées ($B_1$-$B_6$; $B'_1$-$B'_6$ ; $B''_1$-$B''_n$ ; $b_1$-$b_n$ ; $b'_1$-$b'_n$), ce dispositif comprenant en outre des moyens (4, 6, 34) d'introduction desdits composants dans le ou chaque microcanal d'écoulement, ainsi que des moyens (24, 34, $36_1$) de formation dudit mélange, ces moyens de formation (24, 34, $36_1$) étant disposés entre les moyens d'introduction et la ou chaque dérivation, dispositif dans lequel le ou chaque microcanal d'écoulement (36) se divise en au moins deux branches dérivées d'ordre 1 ($B_1$ ; $B'_1$ ; $B''_1$; $b_1$; $b'_1$, dont au moins une se divise en au moins deux branches dérivées d'ordre 2 ($B_2$ ; $B'_2$ ; $B''_2$; $b_2$ ; $b'_2$), au moins une branche dérivée d'ordre (n-1) se divisant en au moins deux branches dérivées d'ordre (n) et pour chaque ordre à l'exception de l'ordre aval, il est prévu deux branches dérivées, dont l'une ($B_1$(1)-$B_5$1) ; $B'_1$(1)-$B'_5$(1) ; $B''_1$(1)-$B''_{n-1}$(1) ; $b_1$(1)-$b_{n-1}$(1) ; $b'_1$(1)-$b'_{n-1}$(1)) n'est pas divisée et se trouve directement reliée à une sortie ($S_1$-$S_5$ ; $S'_1$-$S'_5$ ; $S''_1$-$S''_{n-1}$ ; $s_1$-$s_{n-1}$ ; $s'_1$-$s'_{n-1}$) et dont l'autre ($B_1$(2)-$B_5$(2); $B'_1$(2)-$B'_5$(2) ; $B''_1$(2)-$B''_{n-1}$(2) ; $b_1$(2)-$b_{n-1}$($b_2$) ; $b'_1$(2)-$b'_{n-1}$(2)) est divisée en deux branches dérivées d'ordre immédiatement supérieur ($B_2$-$B_6$ ; $B'_2$-$B'_6$ ; $B''_2$-$B''_n$ ; $b_2$-$b_n$ ; $b'_2$-$b'_n$)

2. Dispositif d'écoulement selon la revendication 1, **caractérisé en ce que** n est supérieur ou égal à 4, de préférence à 7.

3. Dispositif d'écoulement selon la revendication précédente, **caractérisé en ce que**, pour chaque dérivation ($D_1$-$D_6$ ; $D'_1$-$D'_6$ ; $D''_1$-$D''_n$; $d_1$-$d_n$ ; $d'_1$-$d'_n$), les pertes de charge entre la dérivation considérée et les différentes sorties ($S_1$-$S_6$ ; $S'_1$-$S'_6$ ; $S''_1$-$S''_n$ ; $s_1$-$s_n$ ; $s'_1$-$s'_n$) auxquelles cette dérivation est reliée, sont sensiblement identiques.

4. Dispositif d'écoulement selon la revendication 3 **caractérisé en ce que** la longueur (L ; L') des branches non divisées ($B_1$(1)-$B_6$(1) ; $B'_1$(1)-$B'_6$(1)) est double de celle (1 ; 1') des branches divisées ($B_1$(2)-$B_e$(2) ; $B'_1$(2)-$B'_6$(2)).

5. Dispositif d'écoulement selon l'une des revendications 1 à 4, **caractérisé en ce que** les différentes branches divisées ($B'_1$(2)-$B'_6$(2)) sont rectilignes et s'étendent dans le prolongement les unes des autres.

6. Dispositif d'écoulement selon l'une des revendications précédentes, **caractérisé en ce que** les sorties ($S''_1$-$S''_n$ ; $s'_1$-$s'_n$) sont disposées de façon adjacente les unes par rapport aux autres.

**7.** Dispositif d'écoulement selon l'une des revendications précédentes, **caractérisé en ce qu'**il est prévu une unique sortie pour au moins certaines desdites branches dérivées, de préférence pour l'ensemble de ces branches dérivées.

**8.** Dispositif d'écoulement selon l'une des revendications 1 à 7, **caractérisé en ce que** chaque branche divisée ($b_1(2)$-$b_{n-1}(2)$) forme un même angle ($\alpha,\beta$), notamment égal à 135°, avec les deux branches dérivées ($b_2$-$b_n$) s'étendant à partir de cette branche divisée.

**9.** Dispositif d'écoulement selon l'une des revendications précédentes, **caractérisé en ce que** les branches dérivées forment un canal principal (C) possédant des replis ($R_1$-$R_4$), des branches dérivées d'un premier repli s'étendant au voisinage de branches dérivées d'un repli adjacent.

**10.** Dispositif d'écoulement selon l'une des revendications précédentes, **caractérisé en ce que** les branches dérivées forment une succession de plusieurs motifs (M) sensiblement identiques.

**11.** Dispositif d'écoulement selon l'une des revendications précédentes, **caractérisé en ce que**, au voisinage d'au moins une dérivation ($d_1$), il est prévu une branche de liaison (BL) reliant les deux branches dérivées ($b_1(1)$, $b_1(2)$) s'étendant à partir de ladite dérivation.

**12.** Dispositif d'écoulement selon l'une quelconque des revendications précédentes, **caractérisé en ce qu'**il comprend en outre des moyens (4, 6, 24 ; 4', 6' ; 24') de création d'entités dispersées (G ; T'), dont chacune est formée dudit mélange desdits au moins deux composants.

**13.** Dispositif d'écoulement selon la revendication précédente, **caractérisé en ce que** les moyens de création des entités dispersées comprennent au moins deux premiers microcanaux (4, 6 ; 4', 6') d'amenée desdits au moins deux composants, ainsi qu'un microcanal (24 ; 24') d'amenée d'un fluide non miscible avec ces composants et/ou avec leur mélange, qui est mis en communication avec lesdits au moins deux premiers microcanaux.

**14.** Dispositif d'écoulement selon la revendication 11, prise en combinaison avec la revendication 12 ou 13, **caractérisé en ce que** les moyens de création des entités dispersées sont propres à générer une succession de gouttes (G) séparées par des tronçons (T) d'une phase porteuse, alors que la ou chaque branche de liaison (BL) présente des dimensions transversales telles qu'elles permettent le passage de la phase porteuse dans cette branche de liaison, mais empêche le passage des gouttes (G) dans cette branche de liaison.

**15.** Dispositif d'écoulement selon la revendication 14, **caractérisé en ce que** la branche de liaison (BL) possède deux portions d'extrémité ($BL_1$, $BL_2$) de section transversale réduite, ainsi qu'une portion médiane ($BL_3$) dont la section transversale est nettement supérieure à celle desdites portions d'extrémité.

**16.** Dispositif d'écoulement selon l'une quelconque des revendications précédentes, **caractérisé en ce que** le microcanal d'écoulement (36) est pourvu de moyens ($36_1$) permettant le mélange des réactifs au sein de chaque entité dispersée.

**17.** Dispositif d'écoulement selon l'une quelconque des revendications précédentes, **caractérisé en ce que** ce dispositif comprend des moyens (250, 252) permettant d'imposer un gradient d'au moins une condition opératoire au niveau d'au moins une branche dérivée ($B_1$-$B_6$).

**18.** Dispositif d'écoulement selon l'une quelconque des revendications précédentes, **caractérisé en ce que** ce dispositif comprend des sorties, dans lesquelles débouchent au moins certaines desdites branches dérivées, et le nombre de sorties est supérieur au nombre de microcanaux d'écoulement.

**19.** Ensemble de détermination de paramètres d'une transformation physique et/ou chimique comprenant un dispositif d'écoulement microfluidique conforme à l'une quelconque des revendications précédentes, ainsi que des moyens (240) d'analyse dudit mélange (G ; T') desdits au moins deux composants.

**20.** Ensemble de détermination selon la revendication 19, **caractérisé en ce que** les moyens d'analyse sont de nature optique, notamment un analyseur Raman (240), à infrarouge, ou encore à fluorescence.

**21.** Utilisation de l'ensemble conforme à l'une quelconque des revendications 19 ou 20, dans laquelle on introduit les composants dans les moyens d'introduction (4, 6, 34), on forme ledit mélange dans les moyens de formation (24, 34, $36_1$), on fait s'écouler ledit mélange (G ; T') dans le microcanal d'écoulement (36) et on analyse (par 240) ledit mélange, dans au moins une branche dérivée ($B_1$-$B_6$).

**22.** Utilisation selon la revendication 21, **caractérisée en ce qu'**on effectue des analyses (par 240) dudit mélange (G ; T'), dans des branches dérivées d'ordres différents ($B_1$-$B_6$).

**23.** Utilisation selon la revendication 21, **caractérisée**

**en ce qu'**on analyse la composition dudit mélange.

24. Utilisation selon l'une quelconque des revendications 21 à 23, **caractérisée en ce qu'**on fait s'écouler un mélange (G ; T') ayant une composition initiale invariante.

25. Utilisation selon les revendications 23 et 24, **caractérisée en ce qu'**on déduit, à partir de l'étape d'analyse, des paramètres cinétiques de la transformation intervenant entre lesdits au moins deux composants, en particulier une constante cinétique ($k_c$).

26. Utilisation selon l'une quelconque des revendications 21 à 25, **caractérisée en ce qu'**on modifie la composition initiale dudit mélange (G ; T').

27. Utilisation selon l'une quelconque des revendications 21 à 26, **caractérisée en ce qu'**on applique un gradient d'au moins une condition opératoire dans plusieurs branches dérivées d'ordres différents ($B_1(1)$-$B_6(1)$).

28. Utilisation selon la revendication 27, **caractérisée en ce qu'**on détecte l'apparition de cristaux ou d'arrangements spatiaux différents dans les branches dérivées ($B_1(1)$-$B_6(1)$) qui sont soumises audit gradient d'au moins une condition opératoire.

29. Utilisation selon les revendications 27 et 28, **caractérisée en ce qu'**on déduit, à partir de ladite étape de détection, un diagramme de solubilité ou un diagramme de phases.

30. Utilisation selon l'une des revendications 21 à 29, de l'ensemble selon l'une des revendications 19 ou 20, comprenant un dispositif conforme à l'une quelconque des revendications 12 à 18, **caractérisée en ce qu'**on fait s'écouler ledit mélange sous forme d'une succession desdites entités dispersées (G ; T').

31. Utilisation selon la revendication 30, **caractérisée en ce que** les entités dispersées sont des gouttes (G) réparties dans une phase porteuse (T).

32. Utilisation selon la revendication 30, **caractérisée en ce que** les entités dispersées sont des tronçons (T') d'une phase porteuse séparés par des gouttes (G').

33. Utilisation selon l'une des revendications 31 à 33, de l'ensemble selon l'une des revendications 19 ou 20, comprenant un dispositif selon l'une quelconque des revendications 14 à 18, **caractérisée en ce qu'**on fait s' écouler une succession de gouttes (G) et de tronçons (T) d'une phase porteuse au voisinage de ladite dérivation ($d_1$) et de la branche de liaison (BL), la distance (L) entre la dérivation ($d_1$) et la branche de liaison (BL), la longueur (lg) d'une goutte (G), et la longueur (lt) dudit tronçon (T) de phase porteuse étant tels que :

$$(lg+lt)/2 \leq L \leq lg+lt.$$

**Claims**

1. Device for microfluidic flow with a view to accessing parameters of a physical and/or chemical transformation, comprising a body (2), at least one microchannel (36), which is made in this body (2), for the flow of a mixture (G; T') of at least two components, the or each flow microchannel (36) opening into at least one derivation ($D_1$-$D_6$; $D'_1$-$D'_6$; $D''_1$-$D''_n$; $d_1$-$d_n$; $d'_1$-$d'_n$), making it possible to create a tree structure comprising multiple derived branches ($B_1$-$B_6$; $B'_1$-$B'_6$; $B''_1$-$B''_n$; $b_1$-$b_n$; $b'_1$-$b'_n$), this device also comprising means (4, 6, 34) for introducing said components into the or each flow microchannel, and means (24, 34, $36_1$) for forming said mixture, these forming means (24, 34, $36_1$) being arranged between the introduction means and the or each derivation, in which device the or each flow microchannel (36) is divided into at least two derived branches of order 1 ($B_1$; $B'_1$; $B''_1$; $b_1$; $b'_1$), of which at least one is divided into at least two derived branches of order 2 ($B_2$; $B'_2$; $B''_2$; $b_2$; $b'_2$), at least one derived branch of order (n-1) being divided into at least two derived branches of order (n), and for each order except the downstream order, two derived branches are provided, one of which ($B_1(1)$-$B_5(1)$; $B'_1(1)$-$B'_5(1)$; $B''_1(1)$-$B''_{n-1}(1)$; $b_1(1)$-$b_{n-1}(1)$; $b'_1(1)$-$b'_{n-1}(1)$) is not divided, and is connected directly to an outlet ($S_1$-$S_5$; $S'_1$-$S'_5$; $S''_1$-$S''_{n-1}$; $s_1$-$s_{n-1}$; $s'_1$-$s'_{n-1}$), and the other of which ($B_1(2)$-$B_5(2)$; $B'_1(2)$-$B'_5(2)$; $B''_1(2)$-$B''_{n-1}(2)$; $b_1(2)$-$b_{n-1}(2)$; $b'_1(2)$ -$b'_{n-1}(2)$) is divided into two derived branches of immediately higher order ($B_2$-$B_6$; $B'_2$-$B'_6$; $B''_2$-$B''_n$; $b_2$-$b_n$; $b'_2$-$b'_n$).

2. Flow device according to Claim 1, **characterized in that** n is greater than or equal to 4, preferably to 7.

3. Flow device according to the preceding claim, **characterized in that**, for each derivation ($D_1$-$D_6$; $D'_1$-$D'_6$; $D''_1$-$D''_n$; $d_1$-$d_n$; $d'_1$-$d'_n$), the load losses between the derivation under consideration and the various outlets ($S_1$-$S_6$; $S'_1$-$S'_6$; $S''_1$-$S''_n$; $S_1$-$S_n$; $s'_1$-$s'_n$) to which this derivation is connected are approximately identical.

4. Flow device according to Claim 3, **characterized in that** the length (L; L') of the undivided branches ($B_1(1)$-$B_6(1)$; $B'_1(1)$-$B'_6(1)$) is double that (1; 1') of the

divided branches $(B_1(2)-B_6(2); B'_1(2)-B'_6(2))$.

5. Flow device according to any one of Claims 1 to 4, **characterized in that** the various divided branches $(B'_1(2)-B'_6(2))$ are rectilinear and extend as continuations of each other.

6. Flow device according to any one of the preceding claims, **characterized in that** the outlets $(S''_1-S''_n; s'_1-s'_n)$ are arranged adjacently to each other.

7. Flow device according to any one of the preceding claims, **characterized in that** a single outlet is provided for at least some of said derived branches, preferably for all these derived branches.

8. Flow device according to any one of Claims 1 to 7, **characterized in that** each divided branch $(b_1(2)-b_{n-1}(2))$ forms the same angle $(\alpha, \beta)$, in particular equal to 135°, with the two derived branches $(b_2-b_n)$ which extend from this divided branch.

9. Flow device according to any one of the preceding claims, **characterized in that** the derived branches form a principal channel (C) having laps $(R_1-R_4)$, the derived branches of a first lap extending to the neighbourhood of the derived branches of an adjacent lap.

10. Flow device according to any one of the preceding claims, **characterized in that** the derived branches form a succession of multiple approximately identical patterns (M).

11. Flow device according to any one of the preceding claims, **characterized in that**, in the neighbourhood of at least one derivation $(d_1)$, a linking branch (BL), which links the two derived branches $((b_1(1), b_1(2))$ which extend from said derivation, is provided.

12. Flow device according to any one of the preceding claims, **characterized in that** it also includes means (4, 6, 24; 4', 6', 24') for creating dispersed entities (G; T'), each of which is formed of said mixture of said at least two components.

13. Flow device according to the preceding claim, **characterized in that** the means for creating the dispersed entities include at least two first microchannels (4, 6; 4', 6') for supplying said at least two components, and one microchannel (24; 24') for supplying a fluid which is immiscible with these components and/or the mixture of them, said microchannel being put into communication with said at least two first microchannels.

14. Flow device according to Claim 11 taken in combination with Claim 12 or 13, **characterized in that** the means for creating the dispersed entities are likely to generate a succession of drops (G) separated by sections (T) of a carrier phase, whereas the or each linking branch (BL) has transverse dimensions such that they allow the passage of the carrier phase in this linking branch, but prevent the passage of drops (G) in this linking branch.

15. Flow device according to Claim 14, **characterized in that** the linking branch (BL) has two end portions $(BL_1, BL_2)$ of reduced transverse section, and a median portion $(BL_3)$ of which the transverse section is clearly greater than that of said end portions.

16. Flow device according to any one of the preceding claims, **characterized in that** the flow microchannel (36) is provided with means $(36_1)$ which make it possible to mix reagents within each dispersed entity.

17. Flow device according to any one of the preceding claims, **characterized in that** the device includes means (250, 252) which make it possible to impose a gradient of at least one operational condition on at least one derived branch $(B_1-B_6)$.

18. Flow device according to any one of the preceding claims, **characterized in that** this device includes outlets into which at least some of said derived branches open, and the number of outlets is greater than the number of flow microchannels.

19. Assembly for determining the parameters of a physical and/or chemical transformation, comprising a microfluidic flow device conforming to any one of the preceding claims, and means (240) for analysing said mixture (G; T') of said at least two components.

20. Determination assembly according to Claim 19, **characterized in that** the analysis means are of optical type, in particular an infrared or fluorescence Raman analyser (240).

21. Use of the assembly conforming to any one of Claims 19 or 20, in which the components are introduced into the introduction means (4, 6, 34), said mixture is formed in the forming means $(24, 34, 36_1)$, said mixture (G; T') is made to flow in the flow microchannel (36), and said mixture is analysed (by 240) in at least one derived branch $(B_1-B_6)$.

22. Use according to Claim 21, **characterized in that** said mixture (G; T') is analysed (by 240) in the derived branches of different orders $(B_1-B_6)$.

23. Use according to Claim 21, **characterized in that** the composition of said mixture is analysed.

24. Use according to any one of Claims 21 to 23, **characterized in that** a mixture (G; T') having an invariant initial composition is made to flow.

25. Use according to Claims 23 and 24, **characterized in that** from the analysis stage, kinetic parameters of the transformation which occurs between said at least two components, in particular a kinetic constant ($k_c$), are deduced.

26. Use according to any one of Claims 21 to 25, **characterized in that** the initial composition of said mixture (G; T') is modified.

27. Use according to any one of Claims 21 to 26, **characterized in that** a gradient of at least one operational condition is applied in multiple derived branches of different orders ($B_1(1)$-$B_6(1)$).

28. Use according to Claim 27, **characterized in that** the appearance of crystals or different spatial arrangements is detected in the derived branches ($B_1(1)$-$B_6(1)$) which are subjected to the gradient of at least one operational condition.

29. Use according to Claims 27 and 28, **characterized in that** from said detection stage, a solubility diagram or phases diagram is deduced.

30. Use according to any one of Claims 21 to 29 of the assembly according to any one of Claims 19 or 20, including a device conforming to any one of Claims 12 to 18, **characterized in that** said mixture is made to flow in the form of a succession of said dispersed entities (G; T').

31. Use according to Claim 30, **characterized in that** the dispersed entities are drops (G) which are distributed in a carrier phase (T).

32. Use according to Claim 30, **characterized in that** the dispersed entities are sections (T') of a carrier phase separated by drops (G').

33. Use according to any one of Claims 31 to 33 of the assembly according to any one of Claims 19 or 20, including a device conforming to any one of Claims 14 to 18, **characterized in that** a succession of drops (G) and sections (T) of a carrier phase is made to flow in the neighbourhood of said derivation ($d_1$) and of the linking branch (BL), the distance (L) between the derivation ($d_1$) and the linking branch (BL), the length (lg) of a drop (G), and the length (lt) of said carrier phase section (T) being such that:

$$(lg+lt)/2 \leq L \leq lg+lt.$$

**Patentansprüche**

1. Mikrofluid-Strömungsvorrichtung zur Erzielung von Parametern einer physikalischen und/oder chemischen Umwandlung, umfassend einen Körper (2), mindestens einen Mikrokanal (36) zum Durchströmen eines Gemischs (G; T') mindestens zweier Komponenten, der in dem Körper (2) eingebracht ist, wobei der oder jeder Strömungsmikrokanal (36) in mindestens eine Abzweigung ($D_1$-$D_6$; $D'_1$-$D'_6$; $D''_1$-$D''_n$; $d_1$-$d_n$; $d'_1$-$d'_n$) mündet, die die Erzeugung einer Baumstruktur mit mehreren verzweigten Ästen ($B_1$-$B_6$; $B'_1$-$B'_6$; $B''_1$-$B''_n$; $b_1$-$b_n$; $b'_1$-$b'_n$) gestattet, wobei diese Vorrichtung außerdem Mittel (4, 6, 34) zur Einführung der Komponenten in den oder jeden Strömungsmikrokanal sowie Mittel (24, 34, $36_1$) zur Bildung des Gemischs umfasst, wobei diese Mittel zur Bildung (24, 34, $36_1$) zwischen den Mitteln zur Einführung und der oder jeder Abzweigung angeordnet sind, wobei in der Vorrichtung der oder jeder Strömungsmikrokanal (36) sich in mindestens zwei abgezweigte Äste erster Ordnung ($B_1$; $B'_1$; $B''_1$; $b_1$; $b'_1$) aufteilt, von denen mindestens einer sich in mindestens zwei verzweigte Äste ($B_2$; $B'_2$; $B''_2$; $b_2$; $b'_2$) zweiter Ordnung aufteilt, mindestens ein abgezweigter Ast (n-1)-ter Ordnung sich in mindestens zwei verzweigte Äste (n)-ter Ordnung aufteilt und für jede Ordnung mit Ausnahme der stromabwärts liegenden Ordnung zwei verzweigte Äste vorgesehen sind, von denen einer ($B_1(1)$-$B_5(1)$; $B'_1(1)$-$B'_5(1)$; $B''_1(1)$-$B''_{n-1}(1)$; $b_1(1)$-$b_{n-1}(1)$; $b'_1(1)$-$b'_{n-1}(1)$) nicht geteilt ist und sich direkt verbunden mit einem Ausgang ($S_1$-$S_5$; $S'_1$-$S'_5$; $S''_1$-$S''_{n-1}$; $S_1$-$S_{n-1}$; $s'_1$-$s'_{n-1}$) findet und von denen der andere ($B_1(2)$-$B_5(2)$; $B'_1(2)$-$B'_5(2)$); $B''_1(2)$-$B''_{n-1}(2)$; $b_1(2)$-$b_{n-1}(2)$; $b'_1(2)$-$b'_{n-1}(2)$) in zwei verzweigte Äste der unmittelbar höheren Ordnung ($B_2$-$B_6$; $B'_2$-$B'_6$; $B''_2$-$B''_n$; $b_2$-$b_n$; $b'_2$-$b'_n$) geteilt ist.

2. Strömungsvorrichtung nach Anspruch 1, **dadurch gekennzeichnet, dass** n größer oder gleich 4, vorzugsweise 7 ist.

3. Strömungsvorrichtung nach dem vorhergehenden Anspruch, **dadurch gekennzeichnet, dass** für jede Abzweigung ($D_1$-$D_6$; $D'_1$-$D'_6$; $D''_1$-$D''_n$; $d_1$-$d_n$; $d'_1$-$d'_n$) die Druckverluste zwischen der betrachteten Abzweigung und den verschiedenen Ausgängen ($S_1$-$S_6$; $S'_1$-$S'_6$; $S''_1$-$S''_n$; $s_1$-$s_n$; $s'_1$-$s'_n$), mit denen diese Abzweigung verbunden ist, im Wesentlichen identisch sind.

4. Strömungsvorrichtung nach Anspruch 3, **dadurch gekennzeichnet, dass** die Länge (L; L') der nicht geteilten Äste ($B_1(1)$-$B_6(1)$; $B'_1(1)$-$B'_6(1)$) doppelt zu der (1; 1') der aufgeteilten Äste ($B_1(2)$-$B_6(2)$; $B'_2(2)$-$B'_6(2)$) ist.

5. Strömungsvorrichtung nach einem der Ansprüche 1 bis 4, **dadurch gekennzeichnet, dass** die verschiedenen aufgeteilten Äste (B'$_1$(2) -B'$_6$(2)) geradlinig sind und sich in der Verlängerung zueinander erstrecken.

6. Strömungsvorrichtung nach einem der vorhergehenden Ansprüche, **dadurch gekennzeichnet, dass** die Ausgänge (S"$_1$-S"$_n$; s'$_1$-s'$_n$) in zueinander benachbarten Weise angeordnet sind.

7. Strömungsvorrichtung nach einem der vorhergehenden Ansprüche, **dadurch gekennzeichnet, dass** ein einziger Ausgang für mindestens bestimmte der verzweigten Äste, vorzugsweise für die Gesamtheit der verzweigten Äste vorgesehen ist.

8. Strömungsvorrichtung nach einem der Ansprüche 1 bis 7, **dadurch gekennzeichnet, dass** jeder aufgeteilte Ast (b$_1$(2)-b$_{n-1}$(2)) einen gleichen Winkel ($\alpha$, $\beta$), insbesondere gleich 135° mit den zwei verzweigten Ästen (b$_2$-b$_n$) bildet, die sich von diesem geteilten Ast erstrekken.

9. Strömungsvorrichtung nach einem der vorhergehenden Ansprüche, **dadurch gekennzeichnet, dass** die verzweigten Äste einen Hauptkanal (C) bilden, der Schleifen (R$_1$-R$_4$) besitzt, wobei die verzweigten Äste einer ersten Schleife sich in der Nähe der verzweigten Äste einer benachbarten Schleife erstrecken.

10. Strömungsvorrichtung nach einem der vorhergehenden Ansprüche, **dadurch gekennzeichnet, dass** die verzweigten Äste eine Folge von mehreren im Wesentlichen identischen Mustern (M) bilden.

11. Strömungsvorrichtung nach einem der vorhergehenden Ansprüche, **dadurch gekennzeichnet, dass** in der Nähe mindestens einer Abzweigung (d$_1$) ein Verbindungsast (BL) vorgesehen ist, der die zwei verzweigten Äste (b$_1$(2), b$_1$(2)) verbindet, die sich von dieser Abzweigung erstrecken.

12. Strömungsvorrichtung nach einem beliebigen der vorhergehenden Ansprüche, **dadurch gekennzeichnet, dass** sie außerdem Mittel (4, 6, 24; 4', 6'; 24') zur Erzeugung von dispergierten Einheiten (G; T') umfasst, von denen jede aus dem Gemisch der mindestens zwei Komponenten gebildet ist.

13. Strömungsvorrichtung nach dem vorhergehenden Anspruch, **dadurch gekennzeichnet, dass** die Mittel zur Bildung der dispergierten Einheiten mindestens zwei erste Mikrokanäle (4, 6; 4', 6') für die Zufuhr der mindestens zwei Komponenten sowie einen Mikrokanal (24; 24') zur Zufuhr eines nicht mit diesen Komponenten und/oder mit ihrem Gemisch mischbaren Fluids, das in Verbindung mit den mindestens zwei ersten Mikrokanälen gebracht wird.

14. Strömungsvorrichtung nach Anspruch 11, in Kombination mit Anspruch 12 oder 13 genommen, **dadurch gekennzeichnet, dass** die Mittel zur Bildung der dispergierten Einheiten geeignet sind, eine Folge von Tropfen (G), getrennt durch Abschnitte (T) einer Trägerphase, zu erzeugen, wobei der und jeder Verbindungsast (BL) Querabmessungen aufweist, derart, dass sie den Durchgang der Trägerphase in diesem Verbindungsast gestatten, aber den Durchgang der Tropfen (G) in diesem Verbindungsast verhindern.

15. Strömungsvorrichtung nach Anspruch 14, **dadurch gekennzeichnet, dass** der Verbindungsast (BL) zwei Endbereiche (BL$_1$, BL$_2$) mit verringertem Querschnitt sowie einen mittleren Bereich (BL$_3$), dessen Querschnitt deutlich über dem der Endbereiche liegt, besitzt.

16. Strömungsvorrichtung nach einem beliebigen der vorhergehenden Ansprüche, **dadurch gekennzeichnet, dass** der Strömungsmikrokanal (36) mit Mittel (36) versehen ist, die die Mischung der Reaktionsmittel innerhalb jeder dispergierten Einheit ermöglicht.

17. Strömungsvorrichtung nach einem beliebigen der vorhergehenden Ansprüche, **dadurch gekennzeichnet, dass** diese Vorrichtung Mittel (250; 252) umfasst, die einen Gradienten mindestens einer Operationsbedingung an mindestens einem verzweigten Ast (B$_1$-B$_6$) aufzubringen erlauben.

18. Strömungsvorrichtung nach einem beliebigen der vorhergehenden Ansprüche, **dadurch gekennzeichnet, dass** diese Vorrichtung Ausgänge aufweist, in die mindestens einige der verzweigten Äste münden, wobei die Anzahl der Ausgänge größer als die Anzahl der Strömungsmikrokanäle ist.

19. Anordnung zur Bestimmung von Parametern einer physikalischen und/oder chemischen Umwandlung, eine Mikrofluid-Strömungsvorrichtung entsprechend einem beliebigen der vorhergehenden Ansprüche sowie Mittel (240) zur Analyse des Gemischs (G; T') aus den mindestens zwei Komponenten umfassend.

20. Anordnung zur Bestimmung nach Anspruch 19, **dadurch gekennzeichnet, dass** die Mittel zur Analyse optischer Natur sind, insbesondere ein Infrarot- oder außerdem Fluoreszenz-Ramananalysierer (240).

21. Verwendung einer Anordnung nach einem beliebigen der Ansprüche 19 oder 20, bei der man in die Mittel zur Einführung (4, 6, 34) Komponenten einführt, man das Gemisch in den Mitteln zur Bildung (24, 34, $36_1$) bildet, das Gemisch (G; T') in dem Strömungsmikrokanal (36) strömen lässt und man das Gemisch in mindestens einem abgezweigten Ast ($B_1$-$B_6$) analysiert (durch 240).

**22.** Verwendung nach Anspruch 21, **dadurch gekennzeichnet, dass** man Analysen (durch 240) des Gemischs (G; T') in den verzweigten Ästen mit unterschiedlicher Ordnung ($B_1$-$B_6$) durchführt.

**23.** Verwendung nach Anspruch 21, **dadurch gekennzeichnet, dass** man die Zusammensetzung des Gemischs analysiert.

**24.** Verwendung nach einem beliebigen der Ansprüche 21 bis 23, **dadurch gekennzeichnet, dass** man ein Gemisch (G; T') strömen lässt, das eine unveränderte Anfangszusammensetzung aufweist.

**25.** Verwendung nach den Ansprüchen 23 und 24, **dadurch gekennzeichnet, dass** man aus dem Analyseschritt kinetische Parameter der zwischen den mindestens zwei Komponenten auftretenden Transformation, insbesondere eine kinetische Konstante ($k_c$) ableitet.

**26.** Verwendung nach einem beliebigen der Ansprüche 21 bis 25, **dadurch gekennzeichnet, dass** man die Anfangszusammensetzung des Gemischs (G; T') modifiziert.

**27.** Verwendung nach einem beliebigen der Ansprüche 21 bis 26, **dadurch gekennzeichnet, dass** man einen Gradienten mindestens einer Operationsbedingung in mehreren verzweigten Ästen unterschiedlicher Ordnung ($B_1(1)$-$B_6(1)$) aufbringt.

**28.** Verwendung nach Anspruch 27, **dadurch gekennzeichnet, dass** man das Auftreten von Kristallen oder unterschiedlichen räumlichen Anordnungen in den verzweigten Ästen ($B_1(1)$-$B_6(1)$ detektiert, die dem Gradienten mindestens einer Operationsbedingung unterworfen sind.

**29.** Verwendung nach den Ansprüchen 27 und 18, **dadurch gekennzeichnet, dass** man aus dem Detektionsschritt eine Löslichkeitskurve oder ein Phasendiagramm ableitet.

**30.** Verwendung nach einem der Ansprüche 21 bis 29 der Anordnung nach einem der Ansprüche 19 oder 20, eine Vorrichtung entsprechend einem beliebigen der Ansprüche 12 bis 18 umfassend, **dadurch gekennzeichnet, dass** man das Gemisch in der Form einer Folge der dispergierten Einheiten (G; T') strömen lässt.

**31.** Verwendung nach Anspruch 30, **dadurch gekennzeichnet, dass** die dispergierten Einheiten Tropfen (G) sind, die in einer Trägerphase (T) verteilt sind.

**32.** Verwendung nach Anspruch 30, **dadurch gekennzeichnet, dass** die dispergierten Einheiten Abschnitte (T') einer Trägerphase sind, die durch die Tropfen (G') getrennt sind.

**33.** Verwendung nach einem der Ansprüche 31 bis 33 der Anordnung nach einem der Ansprüche 19 oder 20, eine Vorrichtung nach einem beliebigen der Ansprüche 14 bis 18 umfassend, **dadurch gekennzeichnet, dass** man eine Folge von Tropfen (G) und von Abschnitten (T) einer Trägerphase in der Nähe der Abzweigung ($d_1$) und des Verbindungsastes (BL) strömen lässt, wobei der Abstand (L) zwischen der Abzweigung ($d_1$) und dem Verbindungsast (BL), die Länge (lg) eines Tropfens (G) und die Länge (lt) des Abschnitts (T) der Trägerphase derart sind, dass:

$$(lg+lt)/2 \leq L \leq lg+lt$$

ist.

Fig.1

EP 1 890 803 B1

Fig.2

*Fig.3*

*Fig.4*

$b_1(1)$ $s_1$ $d_1$ $b_1(2)$ $\alpha$ $\beta$ $d_2$ $\gamma$ $s_2$ $b_2(1)$ $b_2(2)$

$\alpha$ $\beta$ $b_{n-1}(1)$ $s_{n-1}$ $d_{n-1}$ $b_{n-1}(2)$ $d_n$ $b_n(1)$ $b_n(2)$ $s_n$ $s_n(bis)$

*Fig.5*

$R_2$

$R_4$

$R_1$

$R_4$

C

*Fig.6*

$b'_1(1)$

$b'_1(2)$

$d'_1$

$d'_2$

$b'_n(2)$

$s_n(bis)$

$s'_1$

$d'_n$

$b'_n(1)$

$s'_n$

*Fig.7*

M

21

*Fig.8*

*Fig.8bis*

*Fig.9*

EP 1 890 803 B1

Fig.10

EP 1 890 803 B1

Fig.11

Fig.13

Fig.14

Fig.12

EP 1 890 803 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6637463 B

- US 6391622 A

**Littérature non-brevet citée dans la description**

- **The T-sensor.** *anal. Chem.,* 1999, vol. 71, 5340-5347
- A Microfluidic System for Controlling Reaction Networks in Time. Angewandte Chemie. 2003, vol. 42, 767-772

- Microfluidic route to the control production of nanoparticles. *Chem.commun.,* 2002, 1136-1137